**Europäisches Patentamt**

**European Patent Office**

**Office européen des brevets**

(11) Publication number: **0 141 148**

**B1**

# EUROPEAN PATENT SPECIFICATION

(45) Date of publication of patent specification: **23.11.89**

(51) Int. Cl.⁴: **G 01 N 30/24**

(21) Application number: **84110549.7**

(22) Date of filing: **05.09.84**

(54) **Automatic sample apparatus and sampling method.**

(30) Priority: **14.09.83 IT 2297883 u**
**22.06.84 IT 2155784**
**29.06.84 IT 2243384 u**

(43) Date of publication of application:
**15.05.85 Bulletin 85/20**

(45) Publication of the grant of the patent:
**23.11.89 Bulletin 89/47**

(84) Designated Contracting States:
**AT BE CH DE FR GB LI NL SE**

(56) References cited:
**EP-A-0 032 560**
**EP-A-0 033 012**
**GB-A-2 030 055**
**US-A-3 604 269**
**US-A-4 094 196**

(73) Proprietor: **CARLO ERBA STRUMENTAZIONE S.p.A.**
**I-20090 Rodano Milano (IT)**

(72) Inventor: **Munari, Fausto**
**59 Corso Lodi**
**Milan (IT)**
Inventor: **Tosi, Bruno**
**12 Via Nazario Sauro**
**Verano Brianza (Milan) (IT)**
Inventor: **Trestianu, Sorin**
**15 Avenue Mercure**
**Bruxelles (BE)**
Inventor: **Montagner, Enzo**
**3 Piazza Della Repubblica**
**Pioltello (Milan) (IT)**

(74) Representative: **Marietti, Giuseppe**
**CENTRO DI CONSULENZA IN PROPRIETA'**
**INDUSTRIALE Viale Caldara, 43**
**I-20122 Milano (IT)**

## Description

This invention relates to an automatic sampling apparatus for the injection of samples to be analyzed in a gas chromatographic column, and particularly designed to be used in case of sample injections by means of non vaporizing direct on-column injectors, with the use of a new washing and discharging element specially designed for said apparatus. The invention also relates to a sampling method to be used with said apparatus.

Among the equipments to perform chemical analysis of liquid samples by gas chromatography, automatic samplers, which allow to feed a series of samples to be analyzed to an injector connected to the head of a gas chromatographic column, are well known.

Said automatic samplers may comprise samplers wherein an injection syringe is movable from the sample vials to the injector but these samplers show many drawbacks, so that samplers with the injection syringe fixedly aligned with the injector are preferred.

These last automatic samplers essentially include: an automatic device capable of drawing the sample to be analyzed from a container (a vial) and of feeding it to an injection syringe mounted in line with the inlet part (injection port) of an injector and carrying a needle; automatic means capable of washing the whole sample feeding system in such a way that, at the end of the injection stage of each sample, the device is ready for feeding the syringe with a new sample, without the danger that the syringe is contaminated by traces of the previously injected sample; automatic means actuating the injection syringe and/or needle movements into and out the injector; automatic means for measuring the exact amount of sample to be introduced into the gas chromatographic column; and automatic means for introducing the sample into the gas chromatographic column. In order to drain the washing liquid and the exceeding sample coming out of the injection syringe needle, and preventing them from penetrating the injector body and contaminating it, a switch element is generally foreseen between the injection syringe and the injector.

Said known equipments however cannot be used with on-column type injectors. In particular, the first type does not warrant a perfect alignment between the syringe needle and the on-column injector, while the second type, as the first one, requires the use of sample injection syringes equipped with very thin needles, capable of penetrating inside the gas chromatographic capillary column which presents an internal diameter of approximately 0.2—0.3 mm. Said peculiarity of on-column injectors represents a considerable problem, in that the aforementioned switch element comprises rubber septa hardly pierceable by extremely thin needles, such as those used in on-column injectors. Moreover, the automatic means actuating the injection syringe needle movements into and out of the injector do not assure a sufficient precision of operation as necessary for safe introduction into the gas chromatographic column of the very thin and extremely flexible needle used with the on-column type injectors.

Finally, it is extremely important that the switch element, when used in combination with a direct on-column injector, not only drains the washing liquid and exceeding sample, but ensures that the needle outer surface and the switch element surfaces which will contact the needle are completely free from liquid sample traces which could create an injector pollution in such a manner that the results of an analysis on a sample could be negatively influenced by traces of the previously analyzed sample.

US—A—3604269 discloses a gas chromatography sample injection apparatus for mounting on the top of a chromatographic column and for introduction of a liquid sample into said column by means of a piston-type syringe. Said apparatus comprises an automatic device to introduce the sample into the syringe and to introduce a washing liquid into the syringe such as to clean same between samples, as well as means located between the injector and the syringe to drain the washing liquid and excess of liquid sample. The syringe and the syringe needle are moved into and out of the injector, and the syringe is operated for injecting a selected amount of liquid sample into the chromatograhpic column.

However, this apparatus does not use a non vapourizing direct on-column injector, so that all the previously mentioned problems do not arise.

EP—A—32560 discloses a non vapourizing direct on-column injector having a control valve allowing an injector washing operation to be carried out by the carrier gas. No drain of liquid sample excess and washing liquid is foreseen and the problem of drying the needle outer surface is not envisaged.

Therefore an object of this invention is to provide an automatic sampling apparatus suitable for injection of samples to be analyzed by injectors of the non vapourizing direct on-column type for capillary columns.

A further object of the present invention is to provide a sampling apparatus with a switch element which, besides allowing drainage of the washing liquid and of the exceeding sample without letting them penetrate the injector during said operations, also allows to eliminate any trace of liquid from the needle end as well as from external walls of the needle and from the switch element surfaces which can be in contact with the needle, in a way that it is absolutely certain that during the needle introduction into the injector no trace of liquid sample is dragged by the needle itself inside the injector, with injector pollution.

Another object of this invention is to provide, in a sampling apparatus as above said, a device capable of guiding the needle in its movements, in order to warrant that distortions of the needle do not occur specially due to bending and compressive stress acting on same, so that it is possible to reduce even the diameter of said needle. Said objects are achieved by means of an automatic sampling apparatus for the injection of samples to be analyzed in a gas chromatographic capillary column, comprising an automatic feeding device for alternatively and controlled feeding each sample and a washing fluid to an injection syringe, an injector device having a through passage for a needle fluidically connected with the syringe, a switch element to let the washing fluid and sample excess off, said switch element being placed between said injector device and said syringe and having a duct coaxial with the injector through passage and means for moving the syringe needle within the switch element duct and into and out of the injector, characterized in that said injector device is an injector of the non vapourizing direct on-column type; in that said switch element duct is closed at least at its bottom by a pierceable sealing septum; in that said injection needle has an outer diameter greater than 0.4 mm; in that the diameter of said switch element duct and injector passage for the sample injection syringe needle is greater than or equal to 0.5 mm; in that a capillary tube having a diameter greater than or equal to 0.5 mm connects said injector passage to the gas chromatographic capillary column; and in that said switch element is sealingly mounted in the injector body and comprises at least two secondary ducts, the first of which opens in an intermediate point of said main duct and the second in the bottom area thereof, said latter secondary duct being permanently connected to a source of gas under pressure, while the first secondary duct is connected to an exhaust.

In this way it is possible to have an injection syringe with needles having suitable size to pass through the rubber septa of the switch element without any distortion, while the aforementioned pre-column (i.e. a capillary tube without stationary phase) having a diameter greater than or equal to 0.5 mm, allows safe and reliable introduction of the needle also using said automatic means actuating the injection syringe needle movements into and out the injector. In order to obtain the desired insulation of the injector and of the chromatographic system from the external environment, the switch element is pneumatically mounted on the injector body and is constantly fed, during the sample injection step, with carrier or inert gas to dry the needle outer surface.

Still according to an embodiment of the invention, the needle is inserted in strictly aligned holes of a series of small arms superimposed and spaced between each other; starting from the top of the needle, the first small arm is integral to the needle itself, is connected to the needle support by means of a vertical tube and is also connected to the mobile part of the device actuating the needle movements into and out of the injector, the underlying arms are integral to sliding vertical tubes, inserted in a telescopic way in the tube of the first small arm, and are provided each with a hole in which the needle is inserted in a sliding way and are kept spaced between each other thanks to the action of springs.

When the needle goes down, the small arms jointly go down and thanks to the action of the springs, they remain spaced between each other in a way that the lower small arm touches the support of the aforementioned switch element. The needle continues to go down and the overlying small arm reaches the lower small arm and so on, until all arms are lying one on the other, a condition to which corresponds a complete insertion of the needle in the injector. In this way the needle is kept straight during its downward movement by the superimposed arms, the holes of which remain perfectly aligned. While the small arms move down, the springs which stress them are compressed in a way that, when the needle goes up, they place again the small arms in the starting conditions.

The invention will be now described with reference to the attached drawings.

—Fig. 1 is a longitudinal section of a switch element mounted on an on-column type injector, in an automatic sampling machine;

—Fig. 2 is a detailed view of the switch element of Fig. 1;

—Fig 3 is a side view of the device driving the sample injection needle, with the needle itself partially inserted in the switch element;

—Fig. 4 is a view of the device driving the sample injection needle similar to that of the preceding Fig. but with the needle itself totally introduced in the injector.

Referring to aforementioned Figs., reference 1 indicates the body of an on-column type injector, for instance such as the one described and illustrated in the U.S. patent No. 4.269.608.

The injector body 1 shows a duct 2 for the passage of the needle 3 of a syringe for injection of the sample to be analyzed, connected to an automatic sampler known in itself, and it is fixed to the upper wall 4 of an oven where a gas chromatographic column 25 is housed. A duct 6 allows to introduce carrier gas into the duct 2, downstream the valve 7 closing the latter.

The duct 2 can be washed, in the period between subsequent injections, by inert gas, for instance nitrogen, and for this purpose the valve can optionally have an L-shaped secondary duct 7' which, when the valve is closed, as illustrated in the Fig., connects a duct 7'' sending gas to the duct 2, which on its turn communicates with an upper exhaust opening 2' provided in the body 1 and controlled by a valve 2''. These ducts 2' and 2'' can be also dispensed with, maintaining a good injector operation, but they are suitable for particular conditions.

A switch element 10 is mounted on the injector body, in correspondence to the inlet section of duct 2, by means of a bayonet joint and a seal gasket 9.

The switch element 10 consists of a cylindrical body 11 made of metal, axially bored, the upper end of which can be closed by means of a screw cap 12 also provided with an axial hole 12'. Inside the body 11, starting from its top, there are a rubber septum 13, an element 14 made of stiff chemically inert plastic material (for instance Teflon reg. T.M.) and the seal gasket 9, which has the shape of a so-called "pierced septum". The cap 12 presses the seal or pierced septum 9 against the injector body and allows said septum 9 to carry out a sealing action between the switch element 10 and the injector duct 2. The element 14 has an axial through hole 15 which, at its bottom end, becomes larger to form a small chamber 16 and then to form a seat 17 for partly housing the gasket 9.

The rubber septum 13 is thin and the gasket or septum 9 is pre-pierced coaxially to the hole 15, in order to allow an easy passage of the needle 3 of the injection syringe.

The element 14, besides the axial hole 15, shows two radial holes 18 and 19 communicating with the duct 15 and, through a hole 20, with the chamber 16 respectively. Other holes 21 and 22 correspond to the radial holes 18 and 19 of the element 14 and are provided in the cylindrical envelope of body 11; they allow to connect duct 15, by fittings 21' and 22' and ducts 21'' and 22'', to a gas source (duct 22'') and to a collecting tank or an exhaust for the washing liquid or the exceeding sample (duct 21').

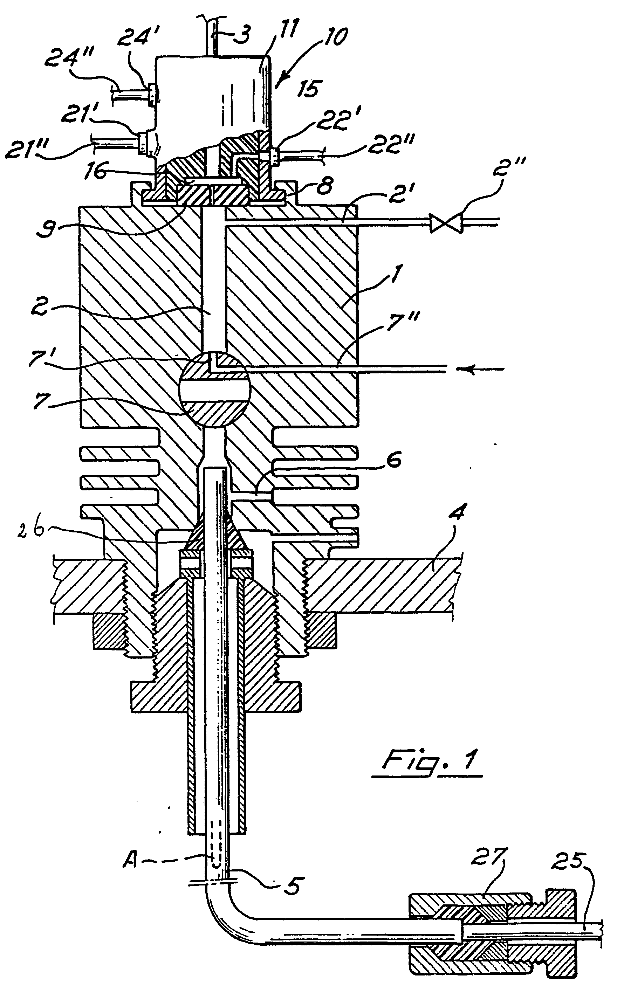

The end of a pre-column 5 (i.e. a capillary tube without stationary phase) is inserted in the bottom end of injector duct 2 (Fig. 1). Said pre-column 5 is sealingly fixed to the injector body by means of a gasket 26 and is connected, at its opposite end, to the gas chromatographic column 25 by means of a joint 27 which can be of any known type.

In order to allow the use of syringe needles sufficiently resistant to pass through the septum 9 without being deformed, the internal diameter of pre-column 5 is greater than or equal to 0.5 mm.

As a consequence, also the injector duct 2 has a diameter greater than or equal to 0.5 mm as well as the passage for the syringe needle in the switch element 10.

The following description of the injection steps of a sample to be analyzed and washing steps of the automatic sampler will make clear the element 10 operation.

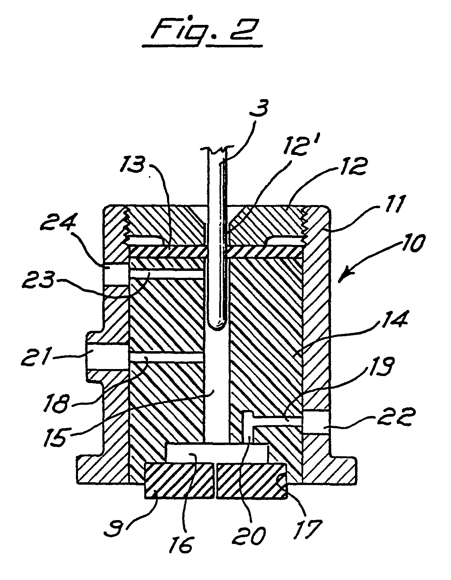

During operation of the automatic sampler, the needle 3 of the injection syringe is inserted into the element 10 and moves between a top position (illustrated in the Figs. 1 and 2), in which the needle tip is located between the septum 13 and the radial hole 18, and a bottom position in which the needle tip is located inside the pre-column 5, essentially in the position indicated by the reference A in Fig. 1.

The steps of washing and elimination of the excess of sample injected to perform a subsequent analysis correspond to the needle top position, while the step of sample introduction in the column corresponds to the needle bottom position.

At the end of each injection the needle 3 is moved to the top position and fed with washing liquid and then with the sample to be analyzed, which is drawn from a vial and sent to the syringe. Simultaneously, through the hole 19, the duct 15 receives a gas flow, the pressure of which is controlled in a way as to create a gaseous cap at the bottom end of the duct 15, under the needle 3.

More detailedly, during this step the pressure of the gas coming out of the hole 19 is such as to prevent the sample from flowing down through the duct 15, and from there, through the hole of septum 9, into the injector body. This object is achieved by controlling the gas flow rate and pressure so that the sample can come out of the needle and penetrate the hole 18, but cannot go down in the duct 15 and reach the septum 9.

When the injection syringe and the needle are filled with the sample and the needle is no longer introduced, the device actuating the needle 3 movements stops for a time period which can be regulated and is necessary for the gas coming from radial hole 19 to eliminate any sample trace from both the duct 15 and the external walls of the needle 3.

During the subsequent needle motion, said gas flow is able to dry the outer needle wall to avoid any injector pollution. In order to improve the above gas action, the element 14, immediately below its top end, can show a radial hole 23 coaxial to a corresponding hole 24 provided in the cylindrical envelope 11 of the element 10, which allows the gas to go up along the side walls of the needle and to dry them as far as near the rubber septum 13, then flowing out through the fitting 24' and duct 24''. This duct 24'' can be controlled by a suitable exhaust valve (not shown).

When this time period is over, the device controlling the needle 3 movements actuates again the needle which reaches the bottom position of sample injection into the gas chromatographic capillary column. It should be noticed that, thanks to the drying action performed by the gas introduced through the hole 19, no sample trace is dragged by the needle 3 through the septum 9 into the injector.

At the end of the injection step and when the needle is up again, the washing cycle of the whole path of the injected sample begins, starting from the sample drawing end to the needle tip.

In order to avoid that sample residues present in the syringe and in the needle as well as the washing fluid itself might go beyond the rubber septum 9 penetrating the duct 2 of the injector, gas is fed through the hole 19. In this way, as during the step of sample metering, the washing liquid is pushed by the gas action into the hole 18 from which, through a suitable duct connected to the hole 21, it flows into a container or an exhaust opening. When any trace of the previously injected sample has been eliminated from the needle and syringe, feeding of the injection syringe with washing liquid is cut down while gas feeding to the hole 19 still continues; in this way the syringe needle is dried by the gas which eliminates any remaining trace of washing liquid. The automatic sampler is thus made available for providing a new sample to the injection syringe, the element 10 and the duct 2 of the injector being perfectly clean.

During this step, it is possible to wash the lower valve 7 as shown in Fig. 1 through the ducts 7″, 7′ and 2′. It must be noticed that in case the valve 7, which is automatically controlled, is able to carry out washing of duct 2 when the needle is removed, as described above, said valve can have a configuration such as that described in the EP—A—32560.

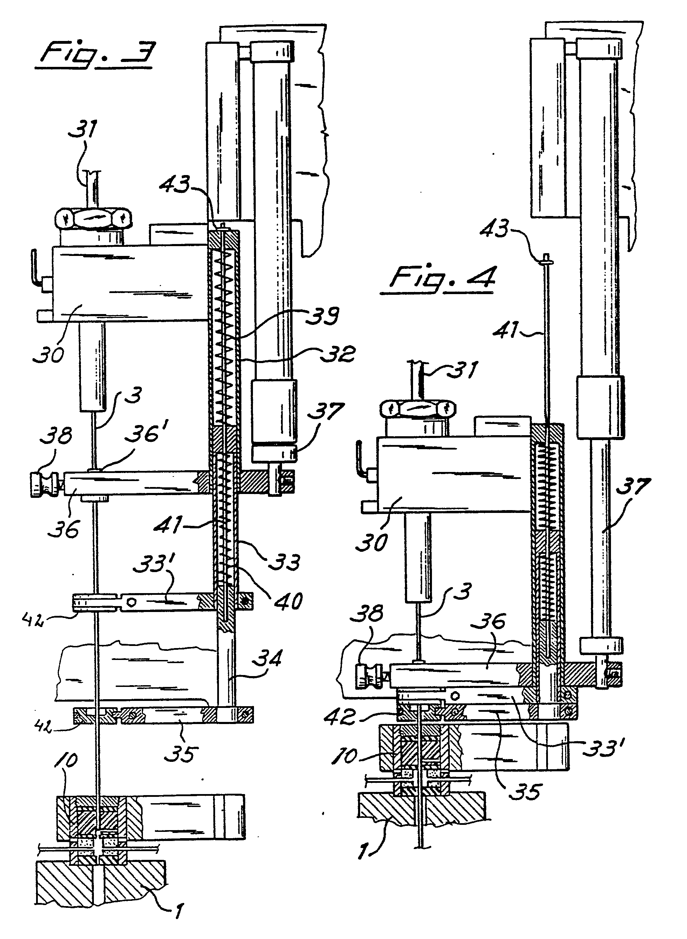

Figures 3 and 4 show a device driving the needle for sample injection; said device comprises: a support 30 holding in its lower part the needle 3 and in its upper part a duct 31 from which the sample to be analyzed is introduced; said support is integral to a vertical tube 32, the bottom end of which receives in a telescopic way a tube 33 to which a small arm 33′ is fixed; in the bottom end of the tube 33 a small cylinder 34 provided on its turn with a small arm 35 is inserted.

The tube 32 driving the support 30 is fixed, on its turn, by means of a small arm 36, to a hydraulic or pneumatic piston 37 controlling the up and down movements of the needle 3. The injection needle is inserted in a suitable hole 36′ provided in the small arm 36 and is fixed therein by a screw 38.

The tubes 32, 33 and the small cylinder 34 are kept spaced between one another by the action of springs 39 and 40 and are guided in their movements by a vertical rod 41. The vertical rod 41 is coaxial to the tubes 33 and 32, is connected at its lower end to the small cylinder 34 and presents, at its top end, a lock 43 capable of maintaining, against the action of springs 39 and 40, the small cylinder 34 and the tubes 33 and 32 in position of reciprocal engagement.

The small arms 33′ and 35 are each provided with a pierced rubber septum 42, in which the injection needle 3 is inserted in a sliding way. The holes in the septa 42 are strictly aligned with each other and with the hole 36′ of the small arm 36. In this way the needle is kept straight during its movements by the superimposed and spaced small arms, the movements of which occur along a way which is parallel to the ideal run of the needle.

In particular, when the needle goes down, the small arms go down jointly and, thanks to the action of the springs 39 and 40, remain spaced between each other so that the lower small arm 35 goes against the support of the switch element 10. The needle continues its down run and the small intermediate arm 33′ reaches the lower small arm 35. Simultaneously the small cylinder 34 enters the tube 33 and the spring 40 is compressed. Finally the small arm 36 reaches the small arm 33′, the tube 33 enters the tube 32 and the spring 39 is compressed. This condition corresponds to the complete insertion of the needle in the injector. When the piston 37 actuates the upward movement of the needle, the action of the springs 39 and 40 restores the initial equispaced position of the small arms.

## Claims

1. An automatic sampling apparatus for the injection of samples to be analyzed in a gas chromatographic capillary column (25), comprising an automatic feeding device for alternatively and controlled feeding each sample and a washing fluid to an injection syringe, an injector device (1) having a through passage (2) for a needle (3) fluidically connected with the syringe, a switch element (10) to let the washing fluid and sample excess off, said switch element (10) being placed between said injector device (1) and said syringe and having a duct (15) coaxial with the injector through passage (2), and means for moving the syringe needle within the element duct (15) and into and out of the injector, characterized in that said injector device (1) is an injector of the non vapourizing direct on-column type; in that said switch element duct (15) is closed at least at its bottom by a pierceable sealing septum (9); in that said injection needle (3) has an outer diameter greater than 0.4 mm; in that the diameter of said switch element duct (15) and injector passage (2) for the sample injection syringe needle is greater than or equal to 0.5 mm; in that a capillary tube (5) having a diameter greater than or equal to 0.5 mm connects said injector passage (2) to the gas chromatographic capillary column (25); and in that said switch element (10) is sealingly mounted on the injector body and comprises at least two secondary ducts (18; 19, 20) the first of which (18) opens in an intermediate point of said switch element duct (15) and the second (19, 20) in the bottom area (16) thereof, said latter secondary duct (19, 20) being permanently connected to a source of gas under pressure, while the first secondary duct (18) is connected to an exhaust.

2. An apparatus according to claim 1, characterized in that said switch element (10) further comprises a third secondary duct (23) connected to an exhaust and opening in said switch element duct (15) upstream said first secondary duct (18) and near a septum (13) closing said switch element duct (15) in its top part.

3. An apparatus according to claim 1 or 2, characterized in that lower part of said switch element duct (15) ends in a chamber (16) defined by said bottom sealing septum (9) and in which said second secondary duct (19, 20) opens.

4. An apparatus according to claim 1, characterized in that said switch element (10) has a cylindrical metallic hollow outer container (11) having a top end which is closed by a pierced cap (12) to allow the needle passage, said cylindrical container comprising, between said sealing septa (9, 13), a body (14) of a chemically inert material provided with said switch element duct (15) and said secondary ducts (18; 19, 20; 23).

5. An apparatus according to any of claims 1 to 4, characterized in that said switch element (10) has a bayonet joint for fixing the same to said injector, in a position in which said bottom sealing septum (9) sealingly rests against the inlet opening of said injector passage (2).

6. An apparatus according to claim 1, characterized in that said second secondary duct (19, 20) is connected to a gas source having a pressure sufficient to prevent the liquid coming out of the needle (3) from entering into contact with said bottom sealing septum (9).

7. An apparatus according to claim 1, characterized in that it comprises a device guiding the movements of said sample injection needle (3), said device being formed by a series of superimposed and spaced small arms (35, 33, 36), said arms being provided with strictly aligned holes in which said injection needle (3) is inserted and being movable toward and away each other in a direction parallel to the needle (3) according to the movements of said needle into and out of the injector respectively.

8. An apparatus according to claim 7, characterized in that said arms comprise: a first arm (36) which is integral to the needle (3) and connected to said means (37) for moving the syringe needle; one or more further arms (33', 35), each provided with a hole in which said needle is inserted in a sliding manner, each of said arms carrying a tube (32, 33, 34) extending parallel to the needle (3) and said tubes being telescopically connected to each other in order to guide arm movements; springs (39, 40) being provided acting on said tubes (32, 33, 34) and arms (35, 33', 36) to keep said arms in spaced relationship when the needle moves out of the injector (1).

9. A method for feeding liquid samples to a non vapourizing direct on column injector (1) of a gas chromatograph by means of a needle (3) using an automatic sampling apparatus according to at least one of the claims 1 to 6 and equipped with a switch element (10) having a main duct (15) for said needle, as well as feeding and discharging secondary ducts (18; 19, 20; 23), said main duct (15) being closed toward said injector by a bottom septum (9), said method comprising the steps of: placing the needle tip in a top position, within said switch element main duct (15) but outside the injector; washing the switch element main duct (15) and the needle (3) by passage of a washing liquid through said needle and out of the needle to said switch element duct; feeding the sample to be analyzed through and out of the needle, which is kept in said top position; stopping feeding of sample to the needle; inserting the needle into the injector and introducing a measured amount of sample, the method being characterized in that, when the needle is in its top position during the washing and feeding sample steps, a gas flow in counterflow with respect to the liquid coming out of the needle is fed to said switch element main duct (15), with a pressure sufficient to avoid that the liquid coming out of the needle contacts said bottom septum (9); and in that the needle is kept for a preset time period in said top position after stopping the feeding of sample out of the needle tip and before inserting the needle into the injector.

**Patentansprüche**

1. Automatische Probenvorrichtung für die Injektion von in einer gaschromatografischen Kapillarsäule (25) zu analysierenden Proben, mit einer automatischen Zufuhreinrichtung zur alternierenden und geregelten Zufuhr einer jeden Probe und eines Waschfluids zu einer Injektionsspritze, einer Injektionseinrichtung (1) mit einem Durchgang (2) für eine mit der Spritze fluidisch verbundene Nadel (3), einem Schaltelement (10) zum Ablauf des Waschfluids sowie überschüssiger Probe, wobei das Schaltelement (10) zwischen der Injektionseinrichtung (1) und der Spritze angeordnet ist und einem zum Injektionsdurchgang (2) koaxialen Kanal (15) aufweist, und mit einer Einrichtung zur Bewegung der Spritzennadel innerhalb des Kanals (15) aus in den Injektor hinein bzw. aus diesem wieder heraus, dadurch gekennzeichnet, daß die Injektoreinrichtung (1) ein Direkt-on-column Injektor ohne Verdampfung ist; daß der genannte Schaltelement-Kanal (15) zumindest an seinem Boden durch eine durchstechbare Dichtungs-Scheidewand verschlossen ist; daß die genannte Injektionsnadel (3) einer äußeren Durchmesser aufweist, der größer als 0,4 mm ist; daß der Durchmesser des genannten Schaltelement-Kanals (15) und des InjektorDurchgangs (2) für die Probeninjektions-Spritzennadel größer oder gleich 0,5 mm ist; daß ein Kapillarröhrchen (5) mit einem Durchmesser größer als oder gleich 0,5 mm den genannten Injektor-Durchgang (2) mit der gaschromatografischen Kapillarsäule (25) verbindet; und daß das genannte Schaltelement (10) dicht auf dem Injektorkörper montiert ist und mindestens zwei Sekundärkanäle (18; 19, 20) aufweist, wobei der erste (18) an einem zwischenliegenden Punkt des Schaltelement-Kanals (15) und der zweite (19, 20) im Bodenbereich (16) desselben mündet, wobei der letztgenannte Sekundärkanal (19, 20) permanent mit einer Durckgasquelle verbunden ist, während der erste Sekundärkanal (18) mit einem Auslaß verbunden ist.

2. Vorrichtung nach Anspruch 1, dadurch gekennzeichnet, daß das Schaltelement (10) ferner einen dritten Sekundärkanal (23) aufweist, der mit einem Auslaß und einer Öffnung in dem genannten Schaltelement-Kanal (15) verbunden ist, die stromauf von dem ersten Sekundärkanal (18) und nahe einer Scheidewand (13) liegt, die den Schaltelement-Kanal (15) an seinem oberen Teil verschließt.

3. Vorrichtung nach Anspruch 1 oder 2, dadurch gekennzeichnet, daß der untere Teil des Schaltelement-Kanals (15) in einer Kammer (16) endet, die durch bodenseitige Dichtungs-Scheidewand (9) begrenzt ist und die der zweite Sekundärkanal (19, 20) mündet.

4. Vorrichtung nach Anspruch 1, dadurch gekennzeichnet, daß das genannte Schaltelement (10) einen zylindrischen, metallisch-hohlen äußeren Behälter (11) mit einem oberen Ende aufweist, welches durch eine für den Durchgang der Nadel gelochte Kappe (12) verschlossen ist, wobei der zylindrische Behälter zwischen den genannten Dichtungs-Scheidewänden (9, 13) einen Körper (14) aus chemisch innertem Material umfaßt, der den genannten Schaltelement-Kanal (15) und die genannten Sekundärkanäle (18; 19, 20; 23) aufweist.

5. Vorrichtung nach einem der Ansprüche 1 bis 4, dadurch gekennzeichnet, daß das genannte Schaltelement (10) eine Bajonettverbindung zur Fixierung desselben am genannten Injektor aufweist, und zwar in einer Position, in der die bodenseitige Dichtungs-Scheidewand (9) dichtend an der Einlaßöffnung des genannten Injektor-Durchgangs (2) anliegt.

6. Vorrichtung nach Anspruch 1, dadurch gekennzeichnet, daß der genannten zweite Sekundärkanal (19, 20) mit einer Gasquelle verbunden ist, die unter einem Druck steht, der ausreichend ist, um zu verhindern, daß die Flüssigkeit, die aus der Nadel (3) austritt, in Kontakt mit der genannten bodenseitigen Dichtungs-Scheidewand (9) kommt.

7. Vorrichtung nach Anspruch 1, dadurch gekennzeichnet, daß sie eine Einrichtung zur Bewegungsführung der genannten Proben-Injektionsnadel (3) aufweist, wobei die genannte Einrichtung durch eine Reihe übereinander und voneinander beabstandeter Arme (35, 33, 36) gebildet ist, wobei die Arme mit genau miteinander fluchtenden Durchgängen versehen sind, in die die genannte Injektionsnadel (3) eingeführt ist, und wobei die genannten Arme jeweils aufeinander zu bzw. voneinander weg in einer Richtung parallel zur Nadel (3) bewegbar sind entsprechend den Bewegungen der genannten Nadel in den Injektor hinein bzw. aus diesem heraus.

8. Vorrichtung nach Anspruch 7, dadurch gekennzeichnet, daß die Arme aufweisen: einen ersten Arm (36), welcher mit der Nadel (3) integriert und mit den genannten Mitteln (37) zur Bewegung der Spritzennadel verbunden ist; einen oder mehrere weitere Arme (33', 35), die jeweils mit einem Durchgang versehen sind, in den die Nadel gleitend eingeführt ist; wobei jeder der genannten Arme ein sich parallel zur Nadel (3) erstreckendes Rohr (32, 33, 34) trägt, wobei die genannten Rohre zur Führung der Armbewegungen jeweils teleskopisch miteinander verbunden sind; und Federn (39, 40), die auf die genannten Rohre (32, 33, 34) und Arme (35, 33', 36) derart einwirken, daß die genannten Arme im Abstand voneinander gehalten werden, wenn die Nadel aus dem Injektor (1) herausbewegt wird.

9. Verfahren zur Zufuhr flüssiger Proben zu einem verdampfungsfreien Direkt-on-column Injektor (1) eines Gaschromatografen mittels einer Nadel (3) unter Verwendung einer automatischen Probenvorrichtung nach mindestens einem der Ansprüche 1 bis 6, die mit einem Schaltelement (10) ausgerüstet ist, welches einen gegenüber dem Injektor durch eine Boden-Scheidewand (9) verschlossenen Hauptkanal (15) für die genannte Nadel sowie sekundäre Zu- und Abfuhrkanäle (18; 19, 20; 23) aufweist, wobei das Verfahren die folgenden Schritte umfaßt: Plazieren der Nadelspitze in einer oberen Position innerhalb des genannten Schaltelement-Hauptkanals (15), jedoch außerhalb des Injektors; Waschen des Schaltelement-Hauptkanals (15) und der Nadel (3) mittels Strömung einer Waschflüssigkeit durch die genannte Nadel und aus der Nadel in den genannten Schaltelement-Kanal; Zufuhr der zu analysierenden Probe durch die in der genannten oberen Position gehaltenen Nadel hindurch und aus dieser heraus; Unterbrechung der Probenzufuhr zur Nadel; Einführen der Nadel in den Injektor und Einleiten einer abgemessenen Probenmenge, wobei das Verfahren dadurch gekennzeichnet ist, daß dann, wenn die Nadel sich während der Wasch- und Probenzufuhr-Schritte in ihrer oberen Position befindet, eine Gasströmung im Gegenstrom zur Flüssigkeit, die aus der Nadel austritt, in den genannten Schaltelement-Hauptkanal (15) eingeleitet wird, und zwar unter einem Druck, der ausreichend ist zu vermeiden, daß die aus der Nadel austretende Flüssigkeit mit der genannten Boden-Scheidewand (9) in Kontakt kommt; und dadurch, daß die Nadel für eine vorbestimmte Zeitspanne nach Unterbrechung der Probenzufuhr aus der Nadelspitze und vor Einführen der Nadel in den Injektor in der genannten oberen Position gehalten wird.

**Revendications**

1. Appareil automatique d'échantillonnage pour l'injection d'échantillons à analyser dans une colonne capillaire de chromatographie gazeuse (25), comprenant un dispositif d'alimentation automatique pour distribuer de façon alternée et réglée chaque échantillon et un fluide de rinçage à une seringue d'injection, un dispositif injecteur (1) comportant un passage traversant (2) pour une aiguille (3) reliée en communication de fluide avec la seringue, un élément de commutation (10) pour purger l'excès de fluide de rinçage et d'échantillon, ledit élément de commutation (10) étant placé entre ledit dispositif injecteur (1) et ladite seringue et comportant un conduit (15) coaxial avec le passage traversant (2) de l'injecteur, et des moyens pour déplacer l'aiguille de seringue dans le conduit (15) de l'élément de façon à ce qu'elle entre et sorte de l'injecteur, caractérisé en ce que le dit dispositif injecteur (1) est une injecteur du type sans vaporisation monté directement sur la colonne; en ce que ledit conduit (15) de l'élément de commutation est fermé au moins à sa partie inférieure par une pièce de séparation étanche perçable (9); en ce que ladite aiguille d'injection (3) a un diamètre extérieur supérieur à 0,4 mm; en ce que le diamètre dudit conduit (15) de l'élément de commutation et du passage (2) de l'injecteur pour l'aiguille de la seringue d'injection d'échantillon est supérieur ou égal à 0,5 mm; en ce qu'un tube capillaire (5) de diamètre supérieur ou égal à 0,5 mm connecte ledit passage d'injecteur (2) à la colonne capillaire de chromatographique gazeuse (25); et en ce que ledit élément de commutation (10) et monté de façon étanche sur le corps d'injecteur et comprend au moins deux conduits secondaires (18, 19, 20) dont le premier (18) débouche en un point intermédiaire du dit conduit (15) de l'élément de commutation et le deuxième (19, 20) débouche dans sa région inférieure (16), ce dernier conduit secondaire (19, 20) étant connectée de façon permanente à une source de gaz sous pression, tandis que le premier conduit secondaire (18) est connecté à une évacuation.

2. Appareil suivant la revendication 1, caractérisé en ce que le dit élément de commutation (10) comprend en outre un troisième conduit secondaire (23) connecté à une évacuation et débouchant dans ledit conduit (15) de l'élément de commutation en amont dudit premier conduit secondaire (18) et près d'une pièce de séparation (13) fermant ledit conduit (15) de l'élément de commutation dans sa partie supérieure.

3. Appareil suivant la revendication 1 ou 2, caractérisé en ce que la partie inférieure dudit conduit (15) de l'élément de commutation se termine dans une chambre (16) définie par ladite pièce d'étanchéité inférieure (9) et dans laquelle débouche ledit deuxième conduit secondaire (19, 20).

4. Appareil suivant la revendication 1, caractérisé en ce que ledit élément de commutation (10) comprend un boîtier extérieur cylindrique métallique creux (11) présentant une extrémité suérieure qui est fermée par un bouchon piercé (12) pour permettre le passage de l'aiguille, ledit boîtier cylindrique comportant, entre lesdites pièces de séparation étanche (9, 13), un corps (14) d'une matière chimiquement inerte dans lequel sont ménagés ledit conduit d'élément de commutation (15) et lesdits conduits secondaires (18; 19, 20; 23).

5. Appareil suivant l'une quelconque des revendications 1 à 4, caractérisé en ce que ledit élément de commutation (10) comporte un accouplement à bayonnette pour sa fixation audit injecteur, dans une position dans laquelle ladite pièce de séparation étanche inférieure (9) repose de façon étanche contre l'orifice d'entrée dudit passage d'injecteur (2).

6. Appareil suivant la revendication 1, caractérisé en ce que ledit deuxième conduit secondaire (19, 20) est connecté à une source de gaz ayant une pression suffisante pour empêcher le liquide sortant de l'aiguille (13) de venir en contact avec ladite pièce de séparation étanche inférieure (9).

7. Appareil suivant la revendication 1, caractérisé en ce qu'il comprend un dispositif de guidage des mouvements de ladite aiguille d'injection d'échantillon (3), ce dispositif étant constitué par une série de petits bras superposés et espacés (35, 33', 36), lesdits bras comportant des trous exactement alignés dans lesquels ladite aiguille d'injection (3) est insérée et pouvant être rapprochés et éloignés les uns des autres dans une direction parallèle à l'aiguille (3) en fonction des mouvements de ladite aiguille dans et hors de l'injecteur respectivement.

8. Appareil suivant la revendication 7, caracatérisé en ce que lesdits bras comprennent: un premier bras (36) qui est solidaire de l'aiguille (3) et relié auxdits moyens (37) de déplacement de l'aiguille de seringue; un ou plusieurs autres bras (33', 35) comportant chacun un trou dans lequel ladite aiguille est insérée de manière coulissante; chacun desdits bras portant un tube (32, 33, 34) qui est parallèle à l'aiguille (3) et lesdits tubes étant télescopiquement connectés les une aux autres afin de guider les mouvements des bras; des ressorts (39, 40) étant prévus pour agir sur lesdits tube (32, 33, 34) et les bras (35, 33', 36) de manière à maintenir lesdits bras en relation d'espacement lorsque l'aiguille sort de l'injecteur (1).

9. Procédé pour la distribution d'échantillons liquides à un injecteur direct sur colonne sans vaporisation (1) d'un chromatographe en phase gazeuse au moyen d'une aiguille (3), utilisant un appareil automatique d'échantillonnage suivant au moins une des revendications 1 à 6 et équipè d'un élément de commutation (10) comportant un conduit principal (15) pour la dite aiguille, ainsi que des conduits secondaires d'alimentation et d'évacuation (18; 19, 20, 23), ledit conduit principal (15) étant fermé du côté dudit injecteur par une pièce de séparation inférieure (9), ledit procédé comprenant les opérations de: amenée de la pointe de l'aiguille à une position haute, à l'intérieur dudit conduit principal (15) de l'élément de commutation mais à l'extérieur de l'injecteur; le rinçage du conduit principal (15) de l'élémente de commutation et de l'aiguille (3) par passage d'un liquide de rinçage dans ladite aiguille et, à la sortie de l'aiguille, vers ledit conduit de l'élément de commutation; l'amenée de l'échantillon à analyser dans l'aiguille et hors de l'aiguille, qui est maintenue dans ladite position haute; l'arrêt de l'amenée d'échantillon à l'aiguille; l'insertion de l'aiguille dans l'injecteur et l'introduction d'une quantité mésurée d'échantillon, le procédé étant caractérisé en ce que, lorsque l'aiguille est dans sa position haute pendant le rinçage et l'amenée d'échantillon, un flux de gaz à contre-courant par rapport au liquide sortant de l'aiguille est amené audit conduit principal (15) de l'élément de commutation, sous une pression suffisante pour éviter que le liquide sortant de l'aiguille vienne en contact avec ladite pièce de séparation inférieure (9); et en ce que l'aiguille est maintenue dans ladite position haute pendant un laps de temps prédéterminé après l'arrêt de la distribution d'échantillon à la sortie de l'extrémité de l'aiguille et avant l'insertion de l'aiguille dans l'injecteur.

EP 0 141 148 B1

*Fig. 1*

1

## Fig. 2

Fig. 3

Fig. 4